# EUROPEAN PATENT APPLICATION

(11) **EP 3 226 496 A1**
(43) Date of publication of application: **04.10.2017**
(21) Application number: 16305371.3
(22) Date of filing: 30.03.2016
(51) Int. Cl.: H04L 25/00, H04L 27/00, H04W 88/08, H04L 5/00

(54) **SYSTEM TO PROCESS A SIGNAL, COMPRISING A REMOTE UNIT AND A CENTRAL UNIT, METHOD AND COMPUTER READABLE MEDIUM**

(71) Applicant: ALCATEL LUCENT, 92100 Boulogne-Billancourt (FR)
(72) Inventor: EL MGHAZLI, Yacine, 91620 NOZAY (FR); BOVIZ, Dora, 91620 NOZAY (FR)
(74) Representative: Berthier, Karine

(57) **Abstract**

System to process a signal, method and computer readable medium. The system comprises a remote unit and a central unit. The Remote Unit comprises a cell-PHY functional module configured to convert a signal to modulated symbols and a user-PHY functional module configured to convert modulated symbols to uncoded bits. The Remote Unit is configured to convert a first part of the baseband signal, to a set of modulated symbols, using the cell-PHY functional module, and to send the set of modulated symbols to the central unit and to convert a second part of the baseband signal, to a set of uncoded bits, using the cell-PHY functional module and the user-PHY functional module, and to send the set of uncoded bits to the central unit.

## Description

### FIELD OF INVENTION

The present subject matter relates to the splitting of the functions, realized by the physical layer, between a central unit and a remote unit. The central unit comprises a BBU (Based Band Unit). The remote unit comprises a RRH (Remote Radio Head) and a preprocessing unit dedicated to the execution of additional functions.

### BACKGROUND

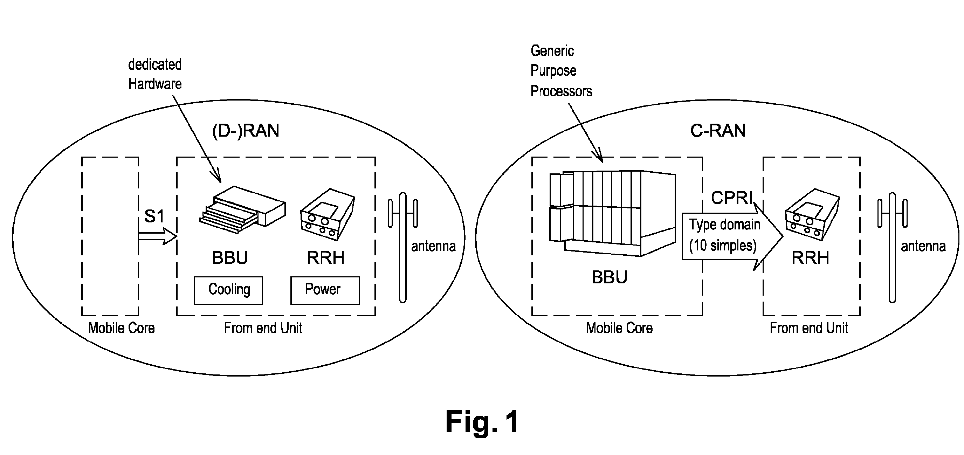

C-RAN stands for Centralized Radio Access Network, it is a Radio Access Network (RAN) deployment proposition that China Mobile introduced in 2011, which consists in separating the Remote Radio Head (RRH), responsible for the Digital/Analogic Conversion (DAC/ADC) of the digitalized radio baseband signal that is produced by the Baseband Unit (the BBU). More precisely, the BBU is responsible for all digital processing and it is connected to the RRH with an optical fiber called fronthaul (FH) link. On the other hand, the RRH is responsible for the radio protocol interface (CPRI, OBSAI), all analog functionalities, amplification and wireless transmission. It remains agnostic to wireless standards and its transparency makes it a suitable solution for multimode broadband communication. The figure 1 presents the difference between the legacy RAN and the C-RAN.

This architecture can be used to implement the so called LTE 3GPP specification, however this architecture can be used to implement other specifications. Within this divulgation the LTE is taken of an example but the man having ordinary skilled in the art can easily derive the propositions of this divulgation to apply them to other specifications. LTE Based Band Unit sends the digitalized RF signal to a Remote Radio Head under the form of digital I/Q samples. This results in a higher data rate of traffic than would be seen in the corresponding backhaul network, making the economics of the fronthaul network particularly difficult. Furthermore physical limitations of the optical fibers don't allow the transmission at the required rate in the case of multiple antennas and large bandwidth (e.g. 100 MHz). As a result, the network has to work under great constraints both in terms of bandwidth and latency.

For example, if we assume a single 20MHz LTE carrier with the following characteristics :
- 2 antenna ports
- 8 antennas
- The spectral efficiency of downlink is 2 b/s/Hz and the spectrum efficiency of uplink is 1.8 b/s/Hz
- The highest modulation type of DL is 64 quadrature amplitude modulation (QAM). The highest modulation type of UL is 16 QAM
- Maximum number of users is 100
the resulting traffic, between the Base Band Unit and Remote Radio Head (transporting baseband) is traffic load independent. It means the baseband level data traffic is constant for any effective user traffic. In this case the required fronthaul bandwidth is high, for the downlink traffic 9,830.4 Mb/s and for the uplink traffic 9,830.4 Mb/s.

Moreover the transport delay requirement is strict, because the transport delay is constrained by the maximum HARQ response time of LTE (4ms). In order to insure the wireless performance, the transport delay on the fronthaul should be in the order of 100 us.

With higher number of antennas and wireless bandwidth, the fronthaul bandwidth requirement will increase significantly. Although all the coordinated technologies can be supported in the BBU, it remains a big challenge on how to encapsulate the data into IP packets, and further meet the strict transport requirements.

The aim of the present subject matter is to propose a new central unit and remote unit architecture that limits the required fronthaul bandwidth and the transport delay requirement.

### SUMMARY

This summary is provided to introduce concepts related to the splitting of the functions, realized by the physical layer, in a system comprising a central unit and a Remote Unit.

In one implementation, a system to process a signal is described. The system comprises a remote unit and a central unit. The Remote Unit comprises a cell-PHY functional module configured to convert a signal to modulated symbols and a user-PHY functional module configured to convert modulated symbols to uncoded bits. The Remote Unit is configured to convert a first part of the baseband signal, to a set of modulated symbols, using the cell-PHY functional module, and to send the set of modulated symbols to the central unit and to convert a second part of the baseband signal, to a set of uncoded bits, using the cell-PHY functional module and the user-PHY functional module, and to send the set of uncoded bits to the central unit.

In another implementation, a method to process a signal is described. This method comprises a first step of converting, by a Remote Unit, a first part of the baseband signal, to a set of modulated symbols, and of sending the set of modulated symbols to a central unit and a second step of converting, by a Remote Unit, a second part of the baseband signal, to a set of uncoded bits, and of sending the set of uncoded bits to the central unit.

In another implementation a computer-readable medium is described. The computer-readable medium has embedded thereon a method to process a signal. The method comprises a first step of converting, by a Remote Unit, a first part of the baseband signal, to a set of modulated symbols, and of sending the set of modulated symbols to a central unit and a second step of converting, by a Remote Unit, a second part of the baseband signal, to a set of uncoded bits, and of sending the set of uncoded bits to the central unit.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents the difference between legacy RAN and C-RAN.
Figure 2 introduces the functional blocks of the Baseband Processing and identifies the potential interfaces for a functional split at the interface central unit/remote unit.
Figure 3 presents an example of up-link joint reception function.
Figure 4 presents a system having static asymmetric splitting of the physical layer functions.
Figure 5 presents a first embodiment of the system of the present subject matter.
Figure 6-a and 6-b present two other embodiments of the system of the present subject matter.
Figure 7 presents in another way the system of the present subject matter
Figure 8 presents a first embodiment of the method of the present subject matter
Figure 9-a and 9-b present two other embodiments of the method of the present subject matter

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

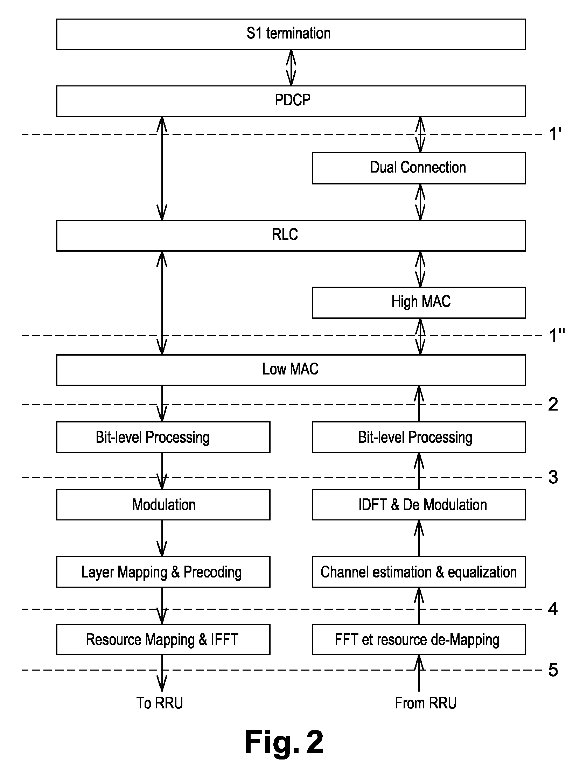

In order to split the functions between the central unit and remote unit several points of splitting can be used. The figure 2 introduces the functional blocks of the Baseband Processing and identifies the potential interfaces for a functional split at the interface between the central unit and the remote unit. In the figure 2, five different solutions of splitting are presented:
- Solution 1: MAC-MAC split
- Solution 2: MAC-PHY split
- Solution 3: BIT/SYMBOL split
- Solution 4: SYMBOL/SAMPLE split
- Solution 5: Baseband/RF split

The functions, realized by the gateway of the remote unit, depend of the solution used for the splitting. For example, when using the solution 5 there is no functions realized by the gateway so the remote unit will be regular remote radio head. When using the solution 2 the gateway comprises the all the physical layer functions. The physical layer is also known as layer 1.

The solution 5 is the existing fronthaul solution with the above described problems. All other solutions offer advantages and drawbacks. In summary, the more you add functions into the remote unit (for example Solutions 1 and 2), the more you relax the bandwidth and latency constraints on the fronthaul network. However, we can lose not only some of the centralization benefits (mutualization) but also the ability to perform a crucial function for C-RAN which is cooperation between cells, in particular Joint reception, which is a type of coordinated multipoint reception (Uplink COMP) where the uplink signal is received via two or more different remote units. This requires that the high PHY layers functions (namely the demodulation and decoding processing blocks) of the two cells are collocated, because of practical constraints, to ensure low latency.

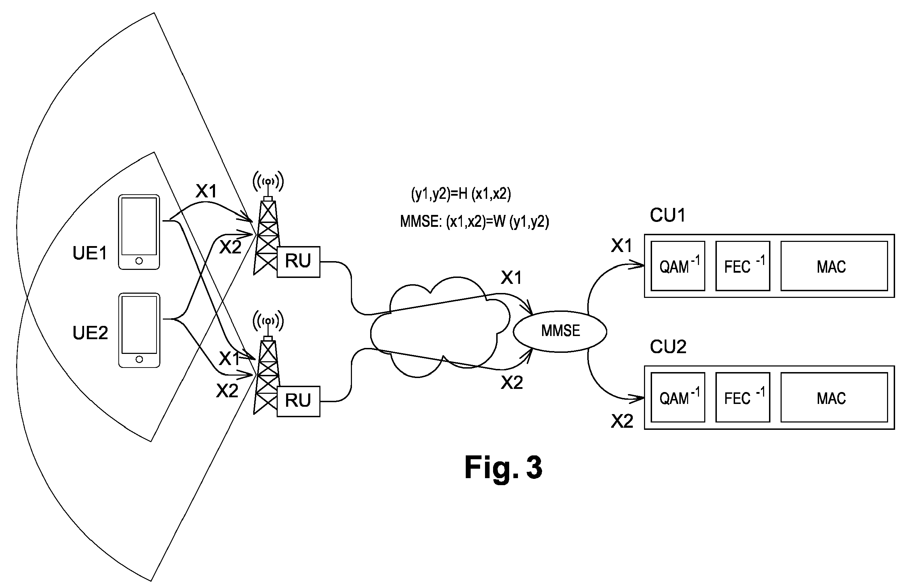

The joint reception function allows the exploitation of interferences between two or more co-channel users located in two neighboring cells. Using multi-cell MMSE detection, we can separate the original data sent by a first and a second user equipment (UE) before the demodulation. This implies that the uplink demodulation of the two eNodeBs (eNBs) involved in the joint reception (eNB) need to be co-located in the central unit, which is not the case for Solution 1,2 and 3. The figure 3 presents an example of up-link joint reception function. As a comparison downlink joint transmission is working unchanged with solution 2 if the remote units and the central unit are adequately synchronized, since the Precoding Matrix Indicators (PMI) are calculated in the layers (for example MAC layer) above the physical layer. This up-link joint reception function is presented figure 3.

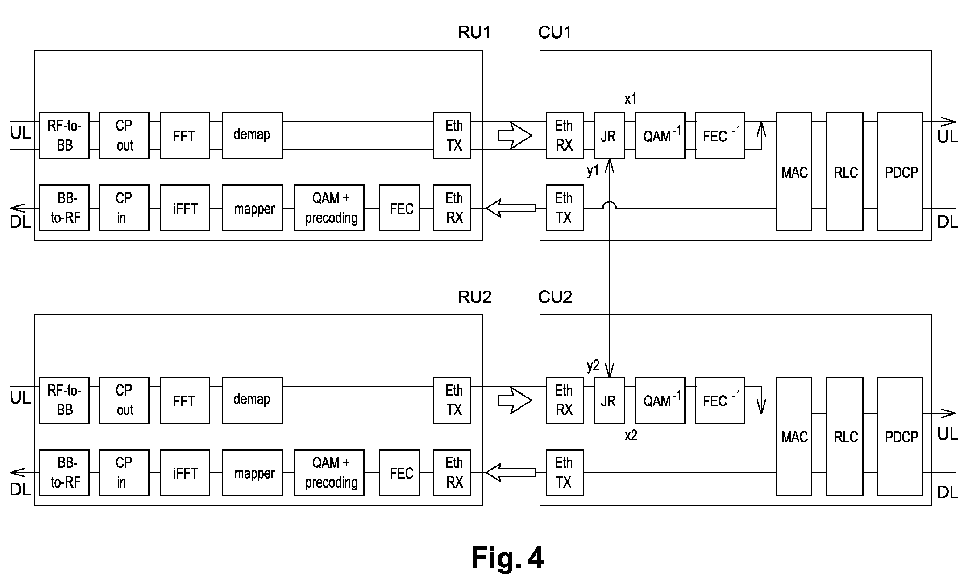

The figure 4 presents a system presented a static asymmetric split. It consists in splitting the downlink processing according to solution 2 and the uplink according to solution 4. This system, thanks to the proposed split, benefits from downlink fronthaul bandwidth reduction and can realize uplink coordinated multipoint (CoMP) reception by simply using protocol from solution 2 for the down link and solution 4 for the uplink.

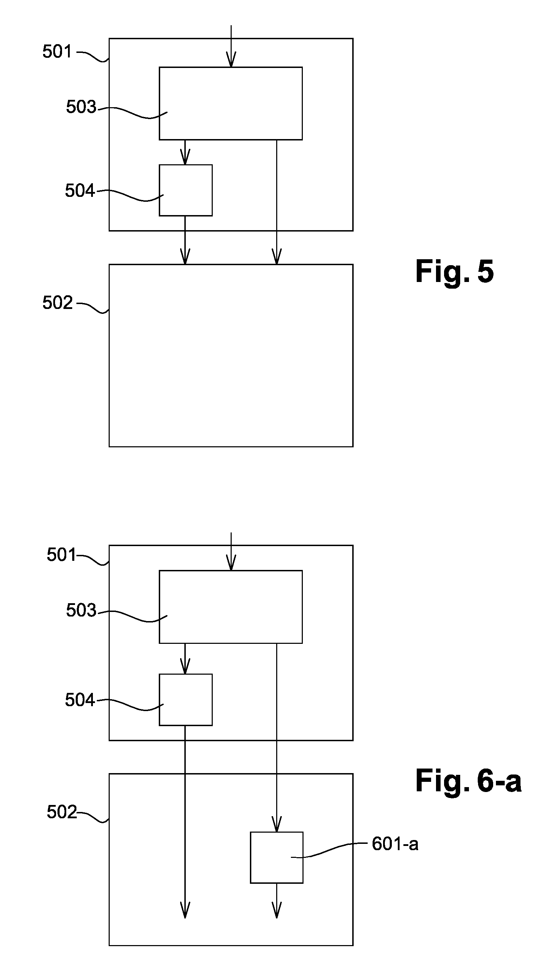

The figure 5 presents a first embodiment of the system, to process a signal, of the present subject matter. The system comprises a remote unit 501 and a central unit 502. The remote unit 501 comprises:
- a cell-PHY functional module 503 configured to convert a signal to modulated symbols
- a user-PHY functional module 504 configured to convert modulated symbols to uncoded bits
Furthermore the remote unit 501 is configured
- to convert a first part of the signal, to a set of modulated symbols, using the cell-PHY functional module 503, and to send the set of modulated symbols to the central unit and
- to convert a second part of the signal, to a set of uncoded bits, using the cell-PHY functional module 503 and the user-PHY functional module 504, and to send the set of uncoded bits to the central unit.

In an embodiment:
- the first part of the signal is constituted of a first set of resource blocks allocated to users suffering from severe co-channel inter-cell interference on uplink and/or
- the second part of the signal is constituted of a second set of resource blocks allocated to users which are not affected by interference coming from neighboring cells.
The first resource block is different from the second resource block.

By users suffering from severe co-channel inter-cell interference on the uplink we mean for example users with signal is received by the system of the present subject matter with Signal-to-Interference-and-Noise-Ratio lower than 5 dB. Typically, these users can be located on the cell-edge, or in a heterogeneous network in a small cell coverage area.

By users which are not affected by interference coming from neighboring cells, we mean users that are located in the cell-center or benefiting from interference management techniques other than joint reception. These users have uplink channel conditions allowing accurate reception in the RU without joint reception.

By modulated symbol we mean a complex symbol in which a finite number of at least two phases and at least two amplitudes are used to contain the information of a set of bits. This complex symbol can for example be BPSK (Binary Phase Shift Keying), QPSK (Quadrature Phase Shift Keying), 16QAM (16 Quadrature amplitude modulation), etc..

The cell-PHY functional module 503 realizes the low PHY or cell-PHY functions. In an embodiment this cell-PHY functional module 503 is configured:
- to remove a cyclic prefix associated to a base band signal and
- to process a block Fourier transformation to the base band signal with the cyclic prefix removed and
- to extract modulated symbols associated to a resource block.
This embodiment is more dedicated to the LTE (Long Term Evolution) standard.

In an embodiment this user-PHY functional module 504 is configured to realize functions from the digitalized radio until the demodulation, in other words all the physical layer uplink processing.

In an embodiment this user-PHY functional module 504 is configured:
- to convert modulated symbols to coded bits and
- to decode the coded bits and
- eventually to equalize the modulated symbols prior to convert modulated symbols to coded bits and
- eventually to multi-antenna processing.
This embodiment is more dedicated to the LTE (Long Term Evolution) standard.

In an embodiment the user-PHY functional module 504 is configured to realize the function above demodulation.

In an embodiment the remote unit also comprises means to convert a baseband signal to a Radio Frequency (RF) signal and vice-versa.

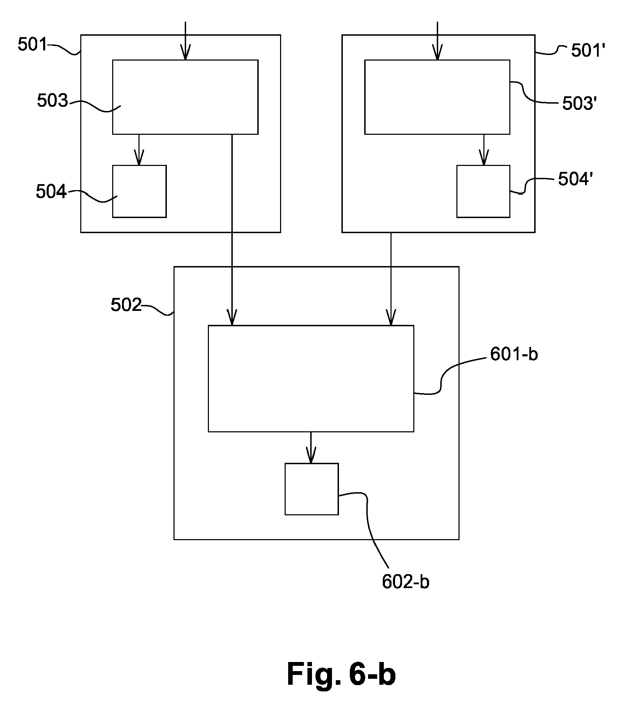

The figure 6-a presents another embodiment of the system. In this embodiment the central unit 502 also comprises a user-PHY functional module 601 to convert modulated symbols to uncoded bits. In this embodiment the central unit 502 is also configured to convert the set of modulated symbols, associated to the first part of the signal, to uncoded bits, using the user-PHY functional module 601.

The figure 6-b presents another embodiment of the system to process a signal. The system comprises at least two remote unit 501 and 501' and a central unit 502. The remote units 501 comprise:
- a cell-PHY functional module 503 configured to convert a signal to modulated symbols and
- a user-PHY functional module 504 configured to convert modulated symbols to uncoded bits
Furthermore the at least two remote units 501 and 501' are configured
- to convert a first part of the baseband signal, to a set of modulated symbols, using the cell-PHY functional module 503, and to send the set of modulated symbols to the central unit and
- to convert a second part of the baseband signal, to a set of uncoded bits, using the cell-PHY functional module 503 and the user-PHY functional module 504, and to send the set of uncoded bits to the central unit.
The central unit 502 comprises
- a joint reception module 601-b configured to jointly received at least two sets of modulated symbols, associated to the same part of the signal and received from the at least two remote units 501 and 501' and
- a user-PHY functional module 602-b to convert modulated symbols to uncoded bits,
The central unit 502 is also configured
- to jointly receive the two sets of modulated symbols, associated to the first part of the signal and received from the at least two remote unit 501 and 501', using the joint reception module 601-b and
- to convert the jointly received set of modulated symbols to uncoded bits using the user-PHY functional module 602-b.

In an embodiment the joint reception module 601-b is configured to use an MMSE (Minimum Mean Square Error) algorithm.

In an embodiment:
- the first part of the signal is constituted of a first set of resource blocks allocated to users suffering from severe co-channel inter-cell interference on uplink and/or
- the second part of the signal is constituted of a second set of resource blocks allocated to users which are not affected by interference coming from neighboring cells.
The first resource block is different from the second resource block.

By users suffering from severe co-channel inter-cell interference on the uplink we mean for example users with signal is received by the system of the present subject matter with Signal-to-Interference-and-Noise-Ratio lower than 5 dB. Typically, these users can be located on the cell-edge, or in a heterogeneous network in a small cell coverage area.

By users which are not affected by interference coming from neighboring cells, we mean users that are located in the cell-center or benefiting from interference management techniques other than joint reception. These users have uplink channel conditions allowing accurate reception in the RU without joint reception.

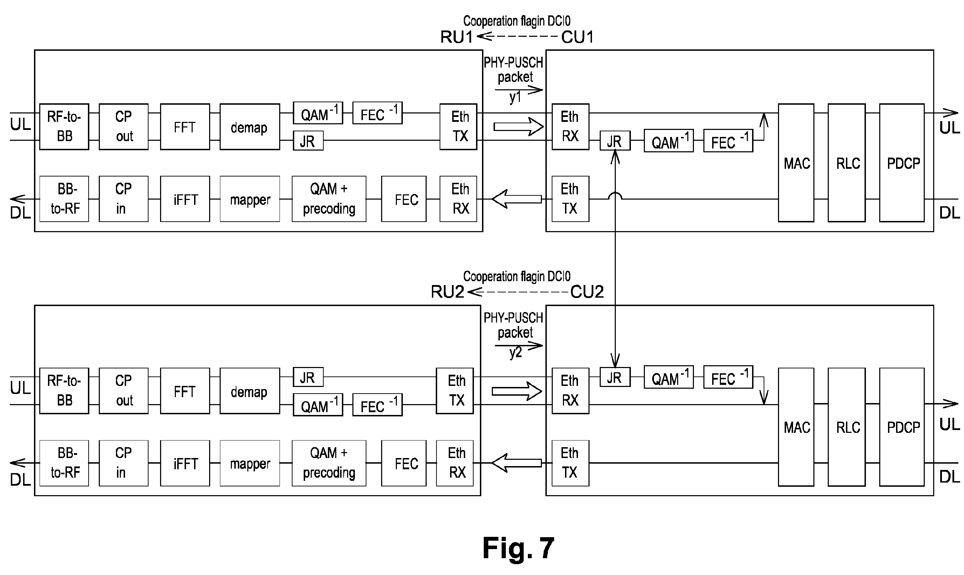

In other words one of the first in the system of the figure 5 and 6, in addition to this asymmetric reception/transmission repartition of physical layer functions between the remote unit and the central unit, we propose to apply the split only on the resource blocks that are concerned by the joint reception function. This configuration is represented on the figure 7.

In an embodiment and in order to decrease the uplink fronthaul bandwidth requirement, the central unit notifies the remote unit which Resource Blocks (RBs) that must be transmitted to the central unit at the symbol/sample level (solution 4). For other resources blocks, physical layer processing is completed at the radio remote head and that decoded bits are forwarded (solution 2). The decision of the radio block selection is taken outside the physical layer by a dedicated function which should coordinate multi-cell joint reception.

In an embodiment of the system the remote unit 501 and/or the central unit 502 comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

At least the functions of the cell-PHY functional module 503 and/or the user-PHY functional module 504 of the remote unit 501 and/or the functions of the user-PHY functional module 601 of the central unit 502 of the are realized by the processor and may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

In an embodiment the communication between the central unit and the remote unit is realized by Ethernet. In order to signal to the remote unit which radio blocks must be treated centrally, a "cooperation flag" is added, for example in the PDCCH DCI0, which contains the uplink resource allocation information for a given user. The use of the PDCCH DCI0 is the most straightforward, implementation, however in some other embodiments it could be added in other part of the signal. This flag is only used by the remote unit; it is not transmitted to the user equipment (UE), which is unaware of this procedure.

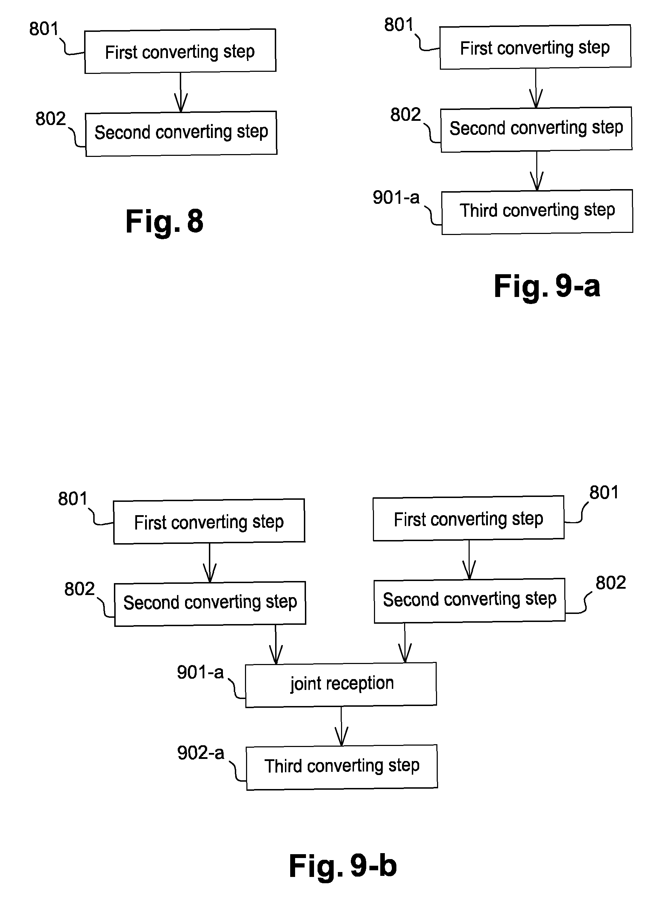

In an embodiment, presented figure 8, a method, to process a signal, is proposed. This method comprising
- a first step 801 of converting, by a Remote Unit, a first part of the baseband signal, to a set of modulated symbols, and of sending the set of modulated symbols to a central unit and
- a second step 802 of converting, by a Remote Unit, a second part of the baseband signal, to a set of uncoded bits, and of sending the set of uncoded bits to the central unit.

In an embodiment:
- the first part of the signal is constituted of a first set of resource blocks allocated to users suffering from severe co-channel inter-cell interference on uplink and/or
- the second part of the signal is constituted of a second set of resource blocks allocated to users which are not affected by interference coming from neighboring cells.
The first resource block is different from the second resource block.

By users suffering from severe co-channel inter-cell interference on the uplink we mean for example users with signal is received by the system of the present subject matter with Signal-to-Interference-and-Noise-Ratio lower than 5 dB. Typically, these users can be located on the cell-edge, or in a heterogeneous network in a small cell coverage area.

By users which are not affected by interference coming from neighboring cells, we mean users that are located in the cell-center or benefiting from interference management techniques other than joint reception. These users have uplink channel conditions allowing accurate reception in the RU without joint reception.

In an embodiment, presented figure 9-a, the method of the figure 8 also comprises;
- a third step 901-a of converting, by a Central Unit, the set of modulated symbols, associated to the first resource block, to uncoded bits.

In an embodiment, presented figure 9-b, the method of the figure 8 also comprises;
- A step 901-b of jointly receiving, by the central unit, at least two sets of modulated symbols, associated to the same part of the signal and received by two different remote units and
- a third step 902-b of converting, by a Central Unit, the set of jointly received modulated symbols, associated to the first resource block, to uncoded bits.

A person skilled in the art will readily recognize that steps of the methods of the present subject matter can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method, of the figure 8, 9-a or 9-b, to process a signal. This method comprising
- a first step 801 of converting, by a Remote Unit, a first part of the baseband signal, to a set of modulated symbols, and of sending the set of modulated symbols to a central unit and
- a second step 802 of converting, by a Remote Unit, a second part of the baseband signal, to a set of uncoded bits, and of sending the set of uncoded bits to the central unit.

In an embodiment:
- the first part of the signal is constituted of a first set of resource blocks allocated to users suffering from severe co-channel inter-cell interference on uplink and/or
- the second part of the signal is constituted of a second set of resource blocks allocated to users which are not affected by interference coming from neighboring cells.
The first resource block is different from the second resource block.

By users suffering from severe co-channel inter-cell interference on the uplink we mean for example users with signal is received by the system of the present subject matter with Signal-to-Interference-and-Noise-Ratio lower than 5 dB. Typically, these users can be located on the cell-edge, or in a heterogeneous network in a small cell coverage area.

By users which are not affected by interference coming from neighboring cells, we mean users that are located in the cell-center or benefiting from interference management techniques other than joint reception. These users have uplink channel conditions allowing accurate reception in the RU without joint reception.

In an embodiment a computer-readable medium having embedded thereon a computer program described in the previous section is proposed.

## Claims

1. System, to process a signal, comprising a Remote Unit (501) and a central unit (502) wherein the Remote Unit (501) comprises:
• a cell-PHY functional module (503) configured to convert a signal to modulated symbols and
• a user-PHY functional module (504) configured to convert modulated symbols to uncoded bits
wherein the Remote Unit (501) is configured
• to convert a first part of the baseband signal, to a set of modulated symbols, using the cell-PHY functional module (503), and to send the set of modulated symbols to the central unit and
• to convert a second part of the baseband signal, to a set of uncoded bits, using the cell-PHY functional module (503) and the user-PHY functional module (504), and to send the set of uncoded bits to the central unit.

2. System according to the claim 1 wherein the central unit (502) also comprises
• a user-PHY functional module (601-a) to convert modulated symbols to uncoded bits, the central unit (502) being also configured to convert the set of modulated symbols, associated to the first part of the signal, to uncoded bits using the user-PHY functional module (601).

3. System according to the claim 1 comprising at least two remote units (501 and 501') and wherein the central unit (502) also comprises
• a joint reception module (601-b) configured to jointly received at least two sets of modulated symbols, associated to the same part of the signal and received by to different remote units (501) and
• a user-PHY functional module (602-b) to convert modulated symbols to uncoded bits, the central unit (502) being also configured
• to jointly receive the two sets of modulated symbols, associated to the first part of the signal and received from the at least two remote unit (501 and 501'), using the joint reception module (601-b) and
• to convert the jointly received set of modulated symbols to uncoded bits using the user-PHY functional module (602-b).

4. System according to any of the previous claims wherein;
• the first part of the signal is constituted of a first set of resource blocks allocated to users suffering from severe co-channel inter-cell interference on the uplink and/or
• the second part of the signal is constituted of a second set of resource blocks allocated to users which are not affected by interference coming from neighboring cells.

5. System according to any of the previous claims wherein the cell-PHY functional module (503) of the Remote Unit (501) is configured:
• to remove a cyclic prefix associated to a base band signal and
• to process a block Fourier transformation to the base band signal with the cyclic prefix removed and
• to extract modulated symbols associated to a resource block.

6. System according to any of the previous claims wherein the user-PHY functional module (504) of the Remote Unit (501) is configured:
• to convert modulated symbols to coded bits and
• to decode the coded bits and
• eventually to equalize the modulated symbols prior to convert modulated symbols to coded bits and
• eventually to multi-antenna processing.

7. System according to any of the previous claims wherein the user-PHY functional module (601) of the central unit (502) is configured:
• to convert modulated symbols to coded bits and
• to decode the coded bits and
• eventually to equalize the modulated symbols prior to convert modulated symbols to coded bits and
• eventually to multi-antenna processing.

8. Method, to process a signal, the method comprising
• a first step (801) of converting, by a Remote Unit, a first part of the baseband signal, to a set of modulated symbols, and of sending the set of modulated symbols to a central unit and
• a second step (802) of converting, by a Remote Unit, a second part of the baseband signal, to a set of uncoded bits, and of sending the set of uncoded bits to the central unit.

9. Method according to the claim 8 also comprising
• a third step (901-a) of converting, by a Central Unit, the set of modulated symbols associated to the first part of the signal, to uncoded bits.

10. Method according to the claim 8 also comprising
• A step (901-b) of jointly receiving, by the central unit, at least two sets of modulated symbols, associated to a same part of the signal and received by two different remote units and
• a third step (902-b) of converting, by a Central Unit, the set of jointly received modulated symbols, associated to the first resource block, to uncoded bits.

11. A computer-readable medium having embedded thereon a method to process a signal, the method comprising
• a first step (801) of converting, by a Remote Unit, a first part of the baseband signal, to a set of modulated symbols, and of sending the set of modulated symbols to a central unit and
• a second step (802) of converting, by a Remote Unit, a second part of the baseband signal, to a set of uncoded bits, and of sending the set of uncoded bits to the central unit.
